# EUROPÄISCHE PATENTSCHRIFT

(11) **EP 2 327 296 B1**
(45) Veröffentlichungstag und Bekanntmachung des Hinweises auf die Patenterteilung: **30.03.2016**
(21) Anmeldenummer: 10192440.5
(22) Anmeldetag: 24.11.2010
(51) Int. Cl.: A01J 15/12, A01J 15/06

(54) **Verfahren zur Anpassung des Leistungsbereichs einer Butterungsmaschine an eine Rahmzuflussmenge**
Method for adjusting the power range of a buttering machine to a cream flow volume
Procédé d'adaptation de l'intervalle de puissance d'une machine à baratter sur une quantité d'alimentation en crème

(30) Priorität: 28.11.2009 DE 102009056222
(43) Veröffentlichungstag der Anmeldung: 01.06.2011
(73) Patentinhaber: GEA Mechanical Equipment GmbH, 59302 Oelde (DE)
(72) Erfinder: Klapper, Siegfried, 33442, Herzebrock-Clarholz (DE); Hinze, Heinz, 59269, Beckum (DE)
(74) Vertreter: Specht, Peter

(56) Entgegenhaltungen:
- DE-B- 1 159 685
- DE-C1- 3 529 677

## Beschreibung

Die Erfindung betrifft ein Verfahren nach dem Oberbegriff des Anspruchs 1 sowie eine Butterungsmaschine nach dem Oberbegriff des Anspruchs 13.

Auf dem Bereich der industriellen Butterungsverfahren hat sich die kontinuierliche Butterung mit einer Maschine nach Dr. Fritz aus dem Jahr 1941 durchgesetzt. Durch diese Maschine und das entsprechende Verfahren wurde eine gute und gleichmäßige Qualität der Butter bei geringen Fettverlusten sichergestellt.

Aufgrund des Fritz/Eisenreich - Verfahrens konnten die Arbeitsschritte der Butter-bildung, Nachbutterung, Abtrennen der Buttermilch, Kneten der Butter und das Einmischen von Zusätzen automatisiert werden. Dabei wurden die Prozesse der Butterung und Nachbutterung von Butterungszylindern und das Abtrennen der Buttermilch als auch das Kneten der Buttermasse von Abpressern mit motorisierten Schneckenantrieben gewährleistet.

Bei der Butterung erfolgt die Umwandlung des zugeführten Rahms in Butterkorn und Buttermilch. Diese Umwandlung einer Fett in Serum Emulsion in eine Serum in Fett Emulsion erfolgt, indem die Membranhülle der Fettkugeln im Rahm durch Scherkräfte eines Schlägers in einem Butterungszylinder zerstört werden und das Fett im Anschluss daran zu Butterkorn agglomerieren kann. Das Serum, also die Buttermilch, wird in den darauf folgenden Bearbeitungsstufen abgetrennt.

Bei den bisherigen Butterungsverfahren kam es z.T. bei geringen oder hohen Rahmzuflussmengen zu einem Über- oder Unterschreiten des Leistungsbereichs.

Dies führte bei einem Unterschreiten des Leistungsbereichs zu einer Überbutterung, mit einem zu hohen Grundwassergehalt und zu einer Begrenzung der zulässigen Dosagemenge an Wasserlösungen, wie z.B. Salzlaugen und Kulturen. Diese Begrenzung beträgt beispielsweise bei der "deutschen Markenbutter" maximal 16% an Wasser.

Ein Überschreiten des Leistungsbereichs führt zu einer Unterbutterung, also einer unvollständigen Phasenumwandlung, wobei nicht alle Fettkugeln aufgeschlossen werden, worunter u.a. die Konsistenz der Butter und der Fettgehalt der Buttermilch leidet.

Einen gattungsgemäßen Stand der Technik offenbart die DE 11 59 685 B. Durch ein Einsatzstück können zwei verschiedene Positionen eines Rahmeinlaufs einer Butterungsmaschine entlang der Rotationsachse des Schlägers erreicht werden.

Die Erfindung setzt daher, ausgehend von dem bestehenden Verfahren, bei der Aufgabe an, die Arbeitsweise einer Butterungsmaschine zu optimieren.

Die Erfindung löst diese Aufgabe durch ein Verfahren mit den Merkmalen des Anspruchs 1 und eine Butterungsmaschine mit den Merkmalen des Anspruchs 13.

Dabei ermöglicht das Verfahren die Anpassung des Leistungsbereichs einer Butterungsmaschine an eine Rahmzuflussmenge, wobei die Butterungsmaschine einen Butterungszylinder mit einem Gehäuse und einem Schläger, welcher um eine Rotationsachse drehbar in dem Gehäuse gelagert ist, aufweist.

Es erfolgt das Einleiten einer bestimmten Rahmzuflussmenge an wenigstens zwei verschiedenen Positionen entlang der Rotationsachse des Schlägers.

Durch gezielten Rahmzufluss an entweder der einen oder der anderen Position der Rotationsachse, kann die Verweilzeit des Butterkorn-/Buttermilch-Gemisches, sowie die effektiv wirksame Schlägerlänge eingestellt werden. Durch diese Anpassung der effektiv wirksamen Schlägerlänge an die Rahmzuflussmenge kann der Wirkungsgrad als auch der Leistungsbereich der Butterungsmaschine eingestellt werden. Somit kann nach dem erfindungsgemäßen Verfahren eine Einstellung des Leistungsbereichs auf unterschiedliche Rahmzuflussmengen erfolgen.

Anschließend erfolgt die Umwandlung von Rahm zu Butterkorn und Buttermilch, indem die Membranhülle der Fettkugeln durch die Scherkräfte des Schlägers zerstört wird und dadurch Fett freigesetzt wird, welches zu einem Fettklumpen, dem Butterkom, agglomeriert.

Schließlich wird das entstandene Butterkorn/Buttermilch-Gemisch aus dem Butterungszylinder abgeführt und entsprechend weiterverarbeitet.

Vorteilhafte Ausgestaltungen der Erfindung sind den Unteransprüche zu entnehmen.

So ist es von Vorteil, wenn während des Umwandelns von Rahm zu Butterkorn und Buttermilch ein Transport des Rahms und des Butterkorn/Buttermilch-Gemisches in Förderrichtung erfolgt. Dabei ist die Förderrichtung die Fließrichtung des Rahm und Butterkorn/Buttermilchstroms zu einem Ableitungskanal, wo das entstandene Butterkorn-/Buttermilch-Gemisch aus dem Butterungszylinder abgeführt wird. Dadurch wird nach dem Rahmzufluss der gerichtete Stofftransport gewährleistet.

Da einzelne Teile, wie beispielsweise der Schläger, im montierten Zustand schwerer zugänglich sind, ist es von Vorteil, wenn die Förderrichtung durch den Aufbau des Butterungszylinders bereits vorgegeben wird. So können schon während der Konstruktion der Anlage entsprechende Vorkehrungen getroffen werden, dass ein gerichteter Stofftransport innerhalb des Butterungszylinders erfolgt.

In der einen vorteilhaften Variante des erfindungsgemäßen Verfahrens nach Anspruch 1 erfolgt das Einleiten des Rahms durch mindestens zwei Einläufe, die fest am Gehäuse des Butterungszylinders angeordnet sind. Bei dieser Ausfuhrungsvariante kann beispielsweise der Rahmzufluss auf zwei oder mehrere Einläufe, beispielsweise in Abhängigkeit zur Rahmzuflussmenge, derart aufgeteilt werden, dass bei geringer Rahmzuflussmenge ein überwiegender Teil des Rahmzuflusses durch den vorderen Einlauf, welcher näher zum Ableitungskanal positioniert ist, und ein geringer Teil der Rahmzuflussmenge in den hinteren Einlauf eingeleitet wird. Bei höherer Rahmzuflussmenge kann ein überwiegender Teil des Rahmzuflusses über den hinteren Einlauf zugegeben werden.

In der anderen vorteilhaften Ausführungsvariante der Erfindung nach Anspruch 1 erfolgt das Einleiten des Rahms durch vorzugsweise einen Einlauf, welcher beweglich am Gehäuse angeordnet ist und der Rahmzufluss an beliebiger Position entlang der Rotationsachse Rahm zum Innenraum des Butterungszylinders erfolgen kann. Hierbei erfolgt die Einstellung des Leistungsbereichs bzw. der effektiv wirksamen Schlägerlänge derart erfolgt, dass der Rahm durch verschiedene Positionierung des Einlaufs entlang der Rotationsachse zugeleitet werden kann.

Weiterhin ist es von Vorteil, wenn das Einleiten des Rahms in den Butterungszylinder bei mindestens 30 % der Schlägergesamtlänge erfolgt, da bei einer geringeren effektiv wirksamen Schlägergesamtlänge keine vollständige Umwandlung von Rahm in Butterkorn/Buttermilch gewährleistet ist.

In einer Ausführungsvariante des Verfahrens ist es vorteilhaft, wenn die Rotationsachse um einen Winkel α zur Horizontalen angestellt wird, zur Vorgabe einer Förderrichtung des Rahms und Butterkorn-/Buttermilch-Gemisches. Das Anstellen der Rotationsachse kann durch Anstellen des Butterungszylinders erfolgen. Dabei kann diese Ausführungsvariante auch auf bereits bestehende Butterungsmaschine angewandt werden.

Es ist besonders von Vorteil, wenn die Achse mit einem Winkel von maximal 10° angestellt ist.

Es ist vorteilhaft, wenn der Winkel α in Abhängigkeit einer Mengenmessung des Rahmflusses vorzugsweise einmalig eingestellt wird, so dass die Strömungsgeschwindigkeit des Rahm- und Butterkorn/Buttermilch-Gemisches durch den Winkel α eingestellt werden kann.

In einer weiteren vorteilhaften Ausführungsvariante des Verfahrens weist der Schläger zumindest ein Schlagblatt auf, welches zumindest teilweise aus der horizontalen Ausrichtungsebene heraussteht. Dadurch wird eine Hangabtriebskraft und somit eine Förderrichtung generiert. Dabei kann der grundsätzliche Aufbau eines Butterungszylinders gewahrt bleiben. Es entstehen daher keine zusätzlichen Materialkosten.

Eine optimale Fördergeschwindigkeit unter Vorgabe einer Förderrichtung kann durch das Verfahren vorteilhaft erreicht werden, indem die Schlagblätter von einem Punkt P, welcher auf der Rotationsachse angeordnet ist, entgegen der Förderrichtung bis zum Ende des Schlagblattes um einen Winkel β von 3 - 10° aus der horizontalen Ausrichtungsebene hervorsteht

Dabei ist es besonders vorteilhaft, wenn der Punkt P von dem das Schlagblatt aus der horizontalen Ausrichtungsebene hervorsteht zwischen einem ersten und einem zweiten Einlauf angeordnet ist.

In einer weiteren vorteilhaften Verfahrensvariante weist der Schläger zumindest ein Schlagblatt auf, in welchem Durchbrüche angebracht sind. Dabei weist der Übergang des Durchbruchs zwischen zwei gegenüberliegenden Seiten des Schlagblatts eine Schräge auf. Wird der Schläger in Betrieb versetzt, so verarbeitet er den Rahm zu Butterkorn und Buttermilch aufgrund von Scherkräften und transportiert das Gemisch zugleich in eine Förderrichtung, da durch die Schräge die einwirkenden Kräfte auch zu einem gewissen Teil in Förderrichtung wirken.

Dabei kann vorteilhaft die Schräge zwischen 30 - 60°, vorzugsweise 45° betragen, da bei einer 45° Schräge Kräfte, die senkrecht zur Förderrichtung auf den Rahm einwirken in die Förderrichtung umgelenkt werden.

Erfindungsgemäß umfasst ein Butterungszylinder einer Butterungsmaschine zur Umwandlung von Rahm in Butterkorn und Buttermilch zumindest ein Gehäuse, einen Schläger, der drehbar um eine Rotationsachse im Gehäuse angeordnet ist, und einem Ableitungskanal, wobei der Rahmzufluss in den Butterungszylinder entweder durch mehrere ortsfeste Einläufe erfolgt, die am Gehäuse entlang der Rotationsachse angeordnet sind oder durch einen variablen Einlauf, welcher mehrere Positionen am Gehäuse entlang der Rotationsachse einnehmen kann.

Dabei kann der variable Einlauf beispielsweise beliebig entlang eines Öffnungsausschnittes im Gehäuse parallel zur Rotationsachse verschoben werden.

Mehrere Ausführungsbeispiele der Erfindung werden im Folgenden anhand der beigefügten Figuren näher erläutert.

Sie zeigen:
- Fig.1: eine schematische Darstellung einer Butterungsmaschine, die nach dem Fritz/Eisenreich Verfahren betrieben wird,
- Fig.2: eine Darstellung eines Ausführungsbeispiels eines erfindungsgemäßen Butterungszylinders mit festgelegten Zuläufen,
- Fig.3: eine Darstellung eines weiteren Ausführungsbeispiels eines erfindungsgemäßen Butterungszylinders mit einer Lanze,
- Fig.4: eine geschnittene Seitenansicht eines weiteren Ausführungsbeispiels eines erfindungsgemäßen Butterungszylinders,
- Fig.5: eine geschnittene Seitenansicht eines weiteren Ausführungsbeispiels eines erfindungsgemäßen Butterungszylinders,
- Fig.6: eine Vorderansicht des Schlägers des vorangegangenen Ausführungsbeispiels,
- Fig.7: eine geschnittene Seitenansicht eines weiteren Ausführungsbeispiels eines erfindungsgemäßen Butterungszylinders,
- Fig.8: Ausschnitt eines Schlagblattes eines Schlägers des erfindungsgemäßen Butterungszylinders des vorangegangenen Ausführungsbeispiels,
- Fig.8a,b: zwei Detaildarstellungen des Ausschnitts

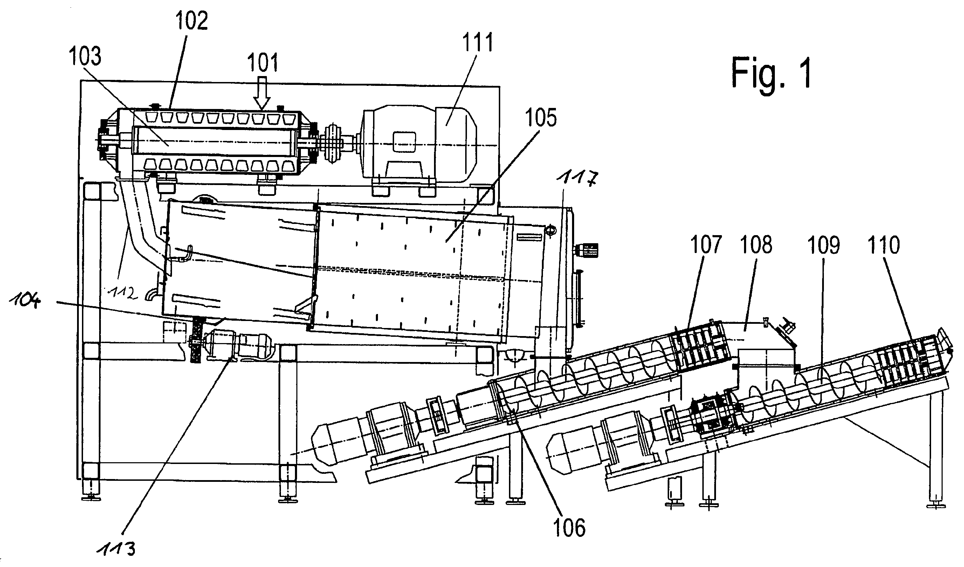

Die in Fig. 1 abgebildete Butterungsmaschine wird nach dem Fritz-Eisenreich verfahren betrieben.

Sie weist einen Butterungszylinder 102 mit einem Einlauf 101 für Rahm auf, sowie einen drehbar angeordneten Schläger 103, für die Bildung von Butterkorns und Buttermilch aus zugeführtem Rahm. Anschließend wird das Butterkorn/Buttermilch-Gemisch über einen Kanal 112 in eine Kühlsektion 104 überführt.

In der Kühlsektion 104 erhält das Butterkorn eine härtere Konsistenz und lässt sich anschließend besser bearbeiten.

In einer Nachbutterungstrommel 105 mit einem Antrieb 113 wird im Nachbutterungsprozess die optimale Butterkorngröße eingestellt. Anschließend wird das Butterkorn über einen Schacht 117 in einen Abpresser 106 überführt.

Der Abpresser 106 wandelt das Butterkorn in eine homogene "Wasser in Öl Emulsion" um und befreit gleichzeitig die Butter von Buttermilchresten, welche anschließend abgeführt werden.

In einer Mischzone 107 werden zu der Butter Wasser, saure Kulturkonzentrate, Aroma-Kulturkonzentrate und Salzlake zudosiert um den Geschmack und die Konsistenz der Butter zu optimieren.

In einer Vakuumkammer 108 wird der Butter Luft entzogen, um deren Schichtenbildung zu verhindern.

Ein weiterer Abpresser 109, sorgt zusammen mit einer sich daran anschließende Mischzone 110 für eine gleichmäßige Verteilung des Wassergehaltes in der Butter und eine Optimierung des Wassergehaltes. Mit einer vorzugsweise integrierten Austragspumpe wird der Ablauf der fertigen Butter aus der Maschine gewährleistet.

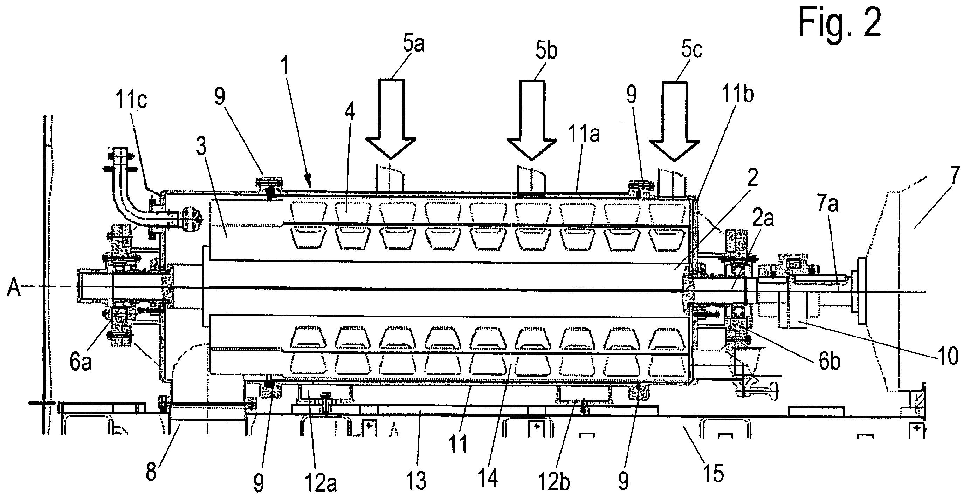

In Figur 2 ist der Aufbau eines Butterungszylinders 1 detailliert dargestellt. Sie zeigt ein zylindrisches Gehäuse 11, welches aus einem Gehäusemantel 11a und zwei Gehäusedeckeln 11b und 11c zusammengesetzt ist. Diese Gehäuseteile sind miteinander durch Flansche 9 verbunden.

Im zylindrischen Gehäuse 11a ist ein Schläger 2 parallel zum zylindrischen Gehäusemantel 11a angeordnet Dieser Schläger 2 dreht sich um eine Rotationsachse A. Der Schläger 2 weist eine Welle 2a auf, welche parallel zum zylindrischen Gehäusemantel 11a verläuft, sowie hier vier Schlagblätter 3, die ausgehend von der Welle 2a in Richtung des zylindrischen Gehäusemantels 11 a verlaufen.

Die Schlagblätter 3 sind kreuzförmig um die Schlagwelle 2a angeordnet und erstrecken sich über einen Großteil der Länge des Butterungszylinders 1. Dabei weisen die Schlagblätter 3 in regelmäßigen Abständen gleichmäßig geformte Durchbrüche 4 auf, wodurch sich entlang der Schlagblätter 3 Rippen 14 ausbilden.

Die Welle 2a sitzt endständig auf Lagern 6a, 6b auf und ist an einem Ende der Welle 2a mit einer Antriebswelle 7a des Antriebs 7 gekoppelt. Die Koppelung beider Wellen 2a, 7a erfolgt mittels eines Flansches 10, wobei die beiden Flanschseiten stirnseitig zueinander verzahnt sind.

Der zylindrische Gehäusemantel 11 weist zudem zwei Sockel 12a, 12b auf, welche mit einem Gestell 15 oder Rahmen oder Maschinengestell fest verbunden sind. Zwischen den Sockeln 12a, 12b und dem Gestell 15 befindet sich eine Rahmen oder Maschinengestell 13. Der Rahmzufluss in den Butterungszylinder 1 erfolgt über die Einläufe 5a, 5b und 5c, welche am Gehäuse 11 angeordnet sind. Die Ableitung des entstandenen Butterkorn/Buttermilch-Gemisches erfolgt über den Ableitungskanal 8.

Die Zugabe einer geringen Rahmzuflussmenge erfolgt überwiegend am Einlauf 5a, wobei lediglich etwa ein Drittel der Schlägergesamtlänge zur Umwandlung des Rahms in Buttermilch und Butterkorn zur Verfügung steht. Bei mittleren Rahmzuflussmengen erfolgt die Rahmzugabe am Einlauf 5b unter Ausnutzung von etwa zwei Drittel der Gesamtlänge des Schlägers. Bei hohen Rahmzuflussmengen erfolgt die Zugabe am Einlauf 5c.

Durch den Eintrag von Rahm an verschiedenen Stellen des Butterungszylinders 1 kann folglich der Leistungsbereich und der Wirkungsbereich der Butterungsmaschine an unterschiedliche Rahmzuflussmengen angepasst werden. Der Eintrag des Rahms in den Innenraum des Butterungszylinders 1 und der Anordnung der Einläufe 5a - c erfolgt dabei am Gehäusemantel 11a des Butterungszylinders 1 senkrecht zur Rotationsachse A.

Der Eintrag der Rahmzuflussmenge kann auch in verschiedenen Quantitäten an allen drei Einläufen zugleich erfolgen oder lediglich an zwei der drei Einläufe. So kann einer Über- oder Unterbutterung entgegengewirkt werden und die Butterungsmaschine auch bei geringen Rahmzuflussmengen betrieben werden.

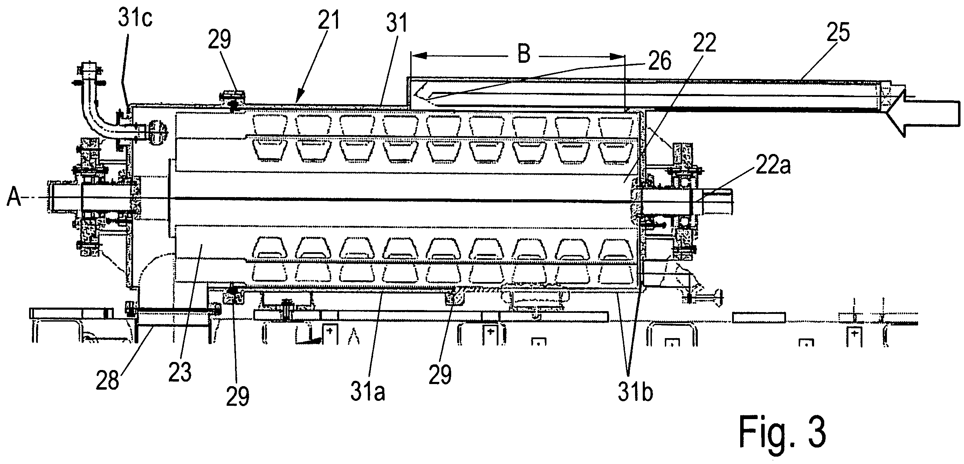

In Figur 3 ist ein Butterungszylinder 21 mit einem Gehäuse 31 abgebildet, in welchem ein Schläger 22, der Schlagblätter 23 aufweist, angeordnet ist.
Das Gehäuse 31 besteht aus einem im Wesentlichen zylindrisch aufgebauten Gehäusemantel 31 a und zwei Gehäusedeckeln 31b, 31c die durch Flansche 29 miteinander verbunden sind. Die Gehäusedeckel können beispielsweise zylindrische Teilabschnitte aufweisen. Die Schlagblätter 23 schließen sich analog zu Figur 2, an eine um die Rotationsachse A rotierend drehenden Schlagwelle 22a des Schlägers 22 radial an.

Der Gehäusedeckel 31b und der Gehäusemantel 31a bilden zusammen einen Zuleitungskanal 25 aus, welcher sich parallel zur Rotationsachse A erstreckt und in Richtung des nicht dargestellten Antriebs 37 von dem Butterungszylinder 21 beabstandet ist. Der Zuleitungskanal 25 verfügt auf der Seite des Butterungszylinders 21 über einen Öffnungsbereich B, welcher sich vorzugsweise über die Hälfte der Gesamtlänge des Schlägers 22 erstreckt. In dem Zuleitungskanal 25 als Einlauf ist eine rohrförmige Lanze 26 geführt. Die Lanze 26 ist beweglich im Zuleitungskanal 25 angeordnet und ermöglicht den Rahmzufluss. Durch Verschieben der Lanze 26 kann der Rahmzufluss an einer beliebigen Stelle des Öffnungsbereichs B in den Innenraum des Butterungszylinders 21 erfolgen.

So kann der Rahmzufluss beispielsweise bei einer Position zugeführt werden, die zwei Drittel der Schlägergesamtlänge entspricht.

Dabei ist die Fliessrichtung des Rahms in der Lanze 26 parallel zur Rotationsachse A. Nach Zuführung des Rahms in den Innenraum des Butterungszylinders 21 wird der Rahm durch den Schläger 22 in Buttermilch und Butterkorn umgewandelt und verlässt den Butterungszylinder 21 durch den Ableitungskanal 28.

Wird der Rahm in den Fig. 2 und 3 nicht an einem Ende des Butterungszylinders 1, 21 zugeführt, sondern beispielsweise in der Mitte des Butterungszylinders 1, 21, so kann der Rahm in Richtung des Ableitungskanals 8, 28 transportiert werden oder entgegen dieser Richtung. Da jedoch erfindungsgemäß lediglich ein Teil der Gesamtlänge des Schlägers 2, 22 für die Bearbeitung des Rahms genutzt werden soll, ist es notwendig, den Butterungszylinder 1, 21 derart umzugestalten, dass eine Förderrichtung X in Richtung des Ableitungskanals 8, 28 vorgegeben wird. Dies kann auf unterschiedliche Art und Weise erfolgen.

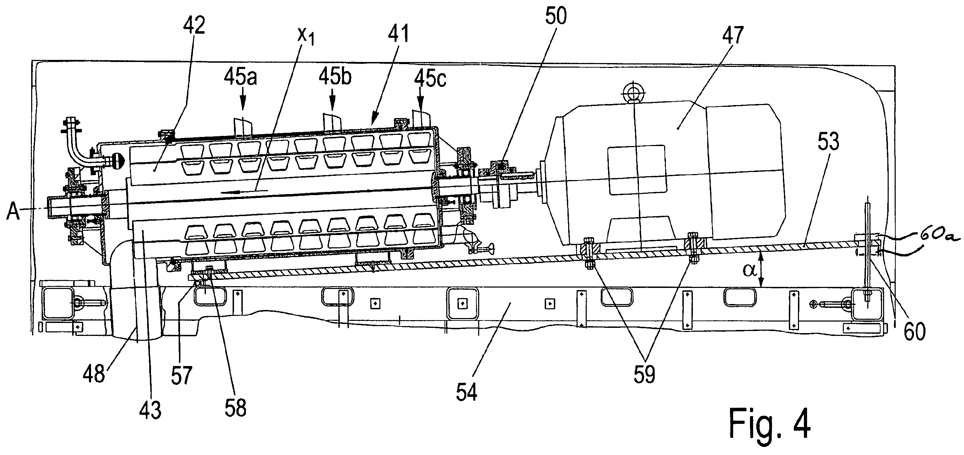

Figur 4 zeigt eine Variante zur Vorgabe einer Förderrichtung X₁ des Rahms in einem Butterungszylinder 41 in Richtung eines Ableitungskanals 48.

Dabei entspricht der Butterungszylinder 41 mit einem Schläger 42, welcher drehbar um eine Rotationsachse A gelagert ist und über kreuzweise angeordnete Schlagblätter 43 verfügt, im Wesentlichen dem Aufbau des Butterungszylinders 1 der Figur 2. Hierbei ist der Schläger 42 über einen Flansch 50 mit dem Antrieb 47 verbunden. Auf dem Butterungszylinder 41 sind drei Einläufe 45 a - c derart angeordnet, dass der Rahm beispielsweise in einem ersten, zweiten oder dritten Drittel des Butterungszylinders 41 zugeführt werden kann. Sowohl der Butterungszylinder 41, als auch der Antrieb 47 sind auf einer Platte 53 durch Befestigungsmittel, beispielsweise Schraubverbindungen 58 und 59, angebracht.

Die Platte 53 ist mit dem Rahmen oder Maschinengestell 54 derart verbunden, dass die Platte an einem Ende eine größere Distanz zum Rahmen oder Maschinengestell 54 einnimmt als an dem gegenüberliegenden Ende. Ziel dieser Vorrichtung ist es im Wesentlichen eine Änderung der Rotationsachse A dahingehend zu ermöglichen, dass sie nicht mehr parallel zur Oberfläche des Rahmen oder Maschinengestells 55 verläuft, sondern um einen Winkel α gegenüber der parallelen Ausrichtung geneigt wurde, so dass eine Förderrichtung X₁ in Richtung des Ableitungskanals 48 generiert wird. Dieser Winkel α wird im vorliegenden Ausführungsbeispiel zwischen der Platte 53 und dem Rahmen oder Maschinengestell 55 gebildet. Der Winkel α kann frei gewählt werden und beispielsweise bis zu 10° besonders bevorzugt bis zu 3° betragen. Für ein leichteres Einstellen dieses Winkels α kann die Platte 53 an der Seite mit dem größeren Abstand zum Rahmen oder Maschinengestell 55 ein höhenverstellbares Befestigungsmittel 60 mit Muttern 60a aufweisen, welches die Platte 53 mit dem Rahmen oder Maschinengestell 55 verbindet.

Gegenüber diesem höhenverstellbaren Befestigungsmittel 60 befindet sich ein Verbindungsstück 57, welches beispielsweise scharnierartig ausgebildet ist und welches sich in Richtung der Längsachse des höhenverstellbaren Befestigungsmittels 60 öffnet.

Durch Ankippen des Butterungszylinders 41 wird also eine geneigte Ebene und eine Hangabtriebskraft erzeugt, so dass die Rahm- und Butterkornmasse in Richtung des Ableitungskanals 48 transportiert wird.

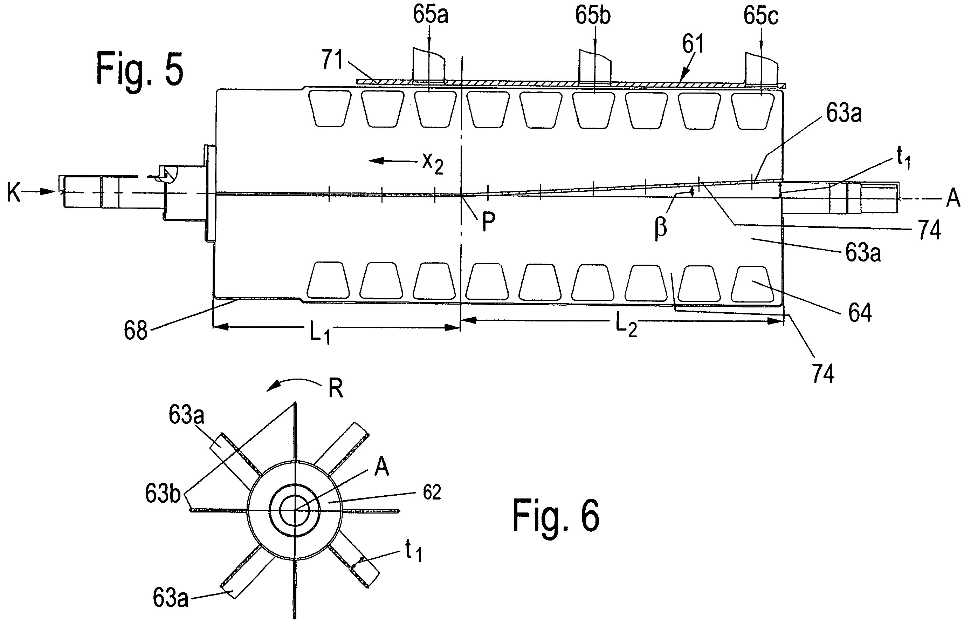

In den Figuren 5 und 6 ist eine weitere Möglichkeit dargestellt, die Förderrichtung X₂ in einem Butterungszylinder 61 konstruktiv vorzugeben. Der schematisch dargestellte Butterungszylinder 61 umfasst u.a. ein zylindrisches Gehäuse 71, in welchem ein Schläger 62 drehbar um eine Rotationsachse A angeordnet ist. Der Schläger 62 weist in Figur 6 acht kreuzweise angeordnete Schlagblätter 63 a, b mit gleichmäßig geformten Durchbrüchen 64 auf, so dass das Material der Schlagblätter 63 a, b, welches zwischen den Durchbrüchen 64 angeordnet ist als Rippen 74 ausgebildet sind.

Über die Einläufe 65 a - c kann Rahm bei unterschiedlicher Länge des Schlägers 62 zugeführt werden. Im vorderen Bereich des Butterungszylinders 61, in der Nähe eines nicht dargestellten Ableitungskanals 68, ist ein Schlagblatt 63a derart angeordnet, dass es über die Länge L₁ entlang der Rotationsachse A verläuft. Dabei ist jedes zweite Schlagblatt über eine Länge L2 angewinkelt, bzw. angestellt.

Die Anordnung von Schlagblätter ist nicht auf acht Schlagblätter beschränkt, sondern kann aus mindestens 2 symmetrisch angeordneten Schlagblättern bestehen, aber auch beispielsweise 4, 6 oder mehr Schlagblätter umfassen, die jedoch symmetrisch angeordnet sein müssen. Von den Schlagblättern sind zumindest 2 Schlagblätter angewinkelt bzw. angestellt.

Zumindest im hinteren Bereich des Butterungszylinders 61 ist das Schlagblatt 63a geneigt ausgerichtet derart, dass es eine Ebene aufspannt, welche ausgehend vom Punkt P um einen Steigungswinkelβ, bezogen auf die Rotationsachse A kontinuierlich ansteigt. Am Ende des Schlägers 62 nimmt das geneigte Schlägerblatt 63a einen Abstand t₁ von der Rotationsachse A ein. Durch die Neigung des Schlägerblattes 63a um den Winkel β wird analog zu Figur 4 eine Teilkraft als Hangabtriebskraft vorgegeben, die in Richtung des nicht dargestellten Ableitungskanals 68 als Förderrichtung X₂ wirkt. Der Neigungswinkel β der Neigung, welche am Punkt P beginnt, beträgt dabei zwischen 3 - 10°, vorzugsweise 3°. Der Punkt P, als der Beginn der Steigung, kann an jedem Punkt des Schlägers 62 beginnen, besonders bevorzugt jedoch zwischen dem ersten Einlauf 65a und dem zweiten Einlauf 65b.

Figur 6 zeigt die Ansicht des Schlägers 62 der Figur 5 in Pfeilrichtung K, welcher in Drehrichtung R drehbar um die Rotationsachse A angeordnet ist. Die insgesamt hier acht Schlagblätter 63a und 63b sind dabei wechselweise angeordnet, so dass das Schlagblatt 63a bei Rotation des Schlägers 62 um 45° die Position des Schlagblattes 63b einnehmen kann. Die Zahl der Schlagblätter beträgt mind. 2, ein Schläger kann aber auch beispielsweise 4 oder 6 Schlagblätter umfassen.

Der Abstand t₁, um welchen die Schlagblätter 63 am Ende des Schlägers 62 geneigt sind, kann je nach Dimensionierung des Schlägers 62 beispielsweise 20 bis 30 cm betragen.

In Figur 6 ist daher jedes zweite Schlagblatt angestellt, so dass es eine geneigte Ebene bildet. Es ist ebenso möglich, alle Schlagblätter anzustellen.

In einer weiteren Ausführungsvariante kann die Neigung nicht durch Anstellen der Schlagblätter erfolgen, sondern beispielsweise durch eine kontinuierliche Materialverdickung des Schlagblattes um den Winkel β.

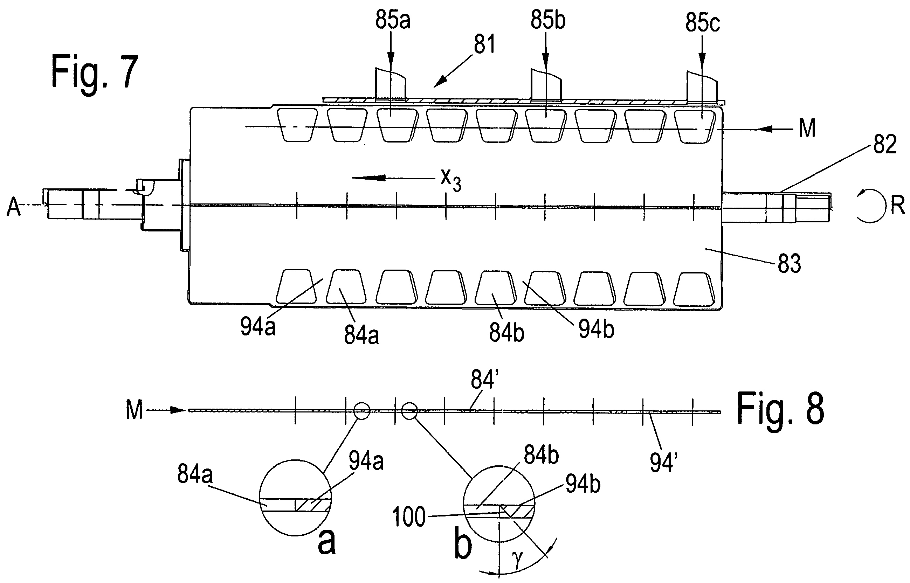

Figur 7 zeigt ein weiteres Ausführungsbeispiel, in welchem die Förderrichtung X₃ durch den Aufbau des Butterungszylinders 81 vorgegeben ist. Dabei weist der Butterungszylinder 81 einen Schläger 82 mit einer Rotationsachse A auf, welcher über kreuzweise angeordnete Schlagblätter 83 verfügt. Die Schlagblätter 83 weisen Durchbrüche 84a, b auf. Zwischen den Durchbrüchen 84a, b weist ein jeweiliges Schlagblatt 83 Rippen 94a, b auf.

Um das Rahm- und Butterkorn/Buttermilch-Gemisch in die Förderrichtung X₃ zu dirigieren, ist der Bereich der Rippen 94b zwischen den Seiten des Schlagblattes 83 angeschrägt.

Dadurch wird beim Schlagen des Rahms ein zusätzlicher Teilimpuls in das Rahmund Butterkorn/Buttermilch-Gemisch in X₃-Richtung eingebracht, wodurch ein Transport des Rahms- bzw. Butterkorns in diese Richtung erfolgt.

Figur 8 ist ein Ausschnitt des Schlagblattes 83 aus Figur 7.

Dabei ist die schraffierte Fläche 94' der Ausschnitt einer Schlagblatt-Rippe 94a, b und die unschraffierte Fläche 84' der Ausschnitt eines Durchbruchs 84a, b.

Die vergrößerte Detaildarstellung (Fig. 8a) zeigt, dass der Übergang von dem Durchbruch 84a zu der Rippe 94a senkrecht zur Ebene des Schlagblattes verläuft.

Figur 8b zeigt, dass der Übergang von dem Durchbruch 84b zu der Rippe 94b um einen Winkel γ angeschrägt ist. Diese Schräge 100 kann beispielsweise zwischen 30 bis 60°, vorzugsweise 45°, betragen. Dadurch erfolgt der Krafteintrag des Schlagblattes 83 auf den Rahm nicht nur senkrecht, sondern auch zu einem Bruchteil in Förderrichtung.

Das erfindungsgemäße Verfahren kann steuer- und regeltechnisch optimiert werden.

So kann der Eintrag der einzelnen Rahmzuflussmengen an den jeweiligen feststehenden Einläufen in Abhängigkeit von der Rahmzuflussmenge gesteuert werden. Dies erfolgt beispielsweise durch eine Mess- und Steuereinheit z.B. durch Mengenmessung des Rahmflusses oder Ermittlung der Stromaufnahme des Antriebs des Schlägers und eine anschließende Mengenteilung für die einzelnen Einläufe in Abhängigkeit von der ermittelten Rahmzuflussmenge erfolgen. Ebenso kann die Positionierung einer Einlauf-Lanze in Abhängigkeit von der aktuellen Rahmzuflussmenge erfolgen.

Zudem kann das erfindungsgemäße Verfahren mit weiteren Verfahren, beispielsweise zur Anpassung der Antriebsleistung des Schlägers an Kennwerte des Rahms kombiniert werden.

**Bezugszeichen**

| | |
|---|---|
| Einlauf | 101 |
| Butterungszylinder | 102 |
| Schläger | 103 |
| Kühlsektion | 104 |
| Nachbutterungstrommel | 105 |
| Abpresser | 106 |
| Mischzone | 107 |
| Vakuumkammer | 108 |
| Abpresser | 109 |
| Mischzone | 110 |
| Antrieb | 111 |
| Kanal | 112 |
| Antrieb | 113 |
| Schacht | 117 |
| | |
| Butterungszylinder | 1, 21, 41, 61, 81 |
| Schläger | 2, 22, 42, 62, 82 |
| Welle | 2a, 22a |
| Schlagblatt | 3, 23, 43, 63a, 63b, 83 |
| Durchbrüche | 4, 64, 84a, 84b |
| Einlauf | 5a, 5b, 5c, 45a, 45b, 45c, 65a, 65b, 65c, 85a-c |
| Lager | 6a, 6b |
| Antrieb | 7, 37, 47 |
| Antriebswelle | 7a |
| Ableitungskanal | 8, 28, 48, 68 |
| Flansch | 9, 10, 29, 50 |
| Gehäuse | 11, 31, 71 |
| Gehäusemantel | 11 a, 31 a |
| Gehäusedeckel | 11b, 11c, 31b, 31c |
| Sockel | 12a, 12b |
| Rahmen oder Maschinengesll | 13 |
| Rippen | 14, 74, 94a, 94b |
| Gestell | 15 |
| Zuleitungskanal | 25 |
| Lanze | 26 |
| Platte | 53 |
| Rahmen/Maschinengestell | 54 |
| Verbindungsstück | 57 |
| Schraubverbindungen | 58, 59 |
| Befestigungsmittel | 60 |
| Muttern | 60a |
| Unschraffierte Fläche | 84' |
| Schraffierte Fläche | 94' |
| Schräge | 100 |
| | |
| Rotationsachse | A |
| Öffnungsbereich | B |
| Förderrichtung | X, X₁, X₂, X₃ |
| Winkel | α, γ |
| Steigungswinkel | β |
| Länge | L₁, L₂ |
| Punkt (Bezugspunkt) | P |
| Abstand | t₁ |
| Pfeilrichtung | K, M |
| Drehrichtung | R |

## Patentansprüche

1. Verfahren zur Anpassung des Leistungsbereichs einer Butterungsmaschine an eine Rahmzuflussmenge, wobei die Butterungsmaschine einen Butterungszylinder (1, 21, 41, 61, 81) mit einem Gehäuse (11, 31, 71) und einem Schläger (2, 22, 42, 62, 82), der drehbar um eine Rotationsachse (A) angeordnet ist, umfasst, mit folgenden Schritten:
a. Einleiten der Rahmzuflussmenge in den Butterungszylinder (1, 21, 41, 61, 81);
b. Umwandeln von Rahm zu Butterkorn und Buttermilch; und
c. Abführen des Buttermilch-Butterkorn-Gemisches aus dem Butterungszylinder (1, 21, 41, 61, 81)
d. das Einleiten der Rahmzuflussmenge in den Butterungszylinder (1, 21, 41, 61, 81) an zumindest zwei verschiedenen Stellen (5a, 5b, 5c, B, 45a, 45b, 45c, 65a, 65b, 65c, 85a-c) entlang der Rotationsachse (A) des Schlägers (2, 22, 42, 62, 82) erfolgen kann und/oder erfolgt,
**dadurch gekennzeichnet, dass**
e. das Einleiten des Rahms durch mindestens zwei Einläufe (5a, 5b, 5c, 45a, 45b, 45c, 65a, 65b, 65c, 85a-c), die fest am Gehäuse (11, 71) des Butterungszylinders (1, 41, 61, 81) angeordnet sind, erfolgt, oder
f. das Einleiten des Rahms durch vorzugsweise einen Einlauf (25, 26) erfolgt, welcher beweglich am Gehäuse (31) des Butterungszylinders (21) angeordnet ist und an beliebiger Position entlang der Rotationsachse (A) Rahm an einen Innenraum des Butterungszylinders (21) leitet.

2. Verfahren nach Anspruch 1, **dadurch gekennzeichnet, dass** während des Umwandelns von Rahm zu Butterkorn und Buttermilch ein Transport des Rahms und Butterkorn-Buttermilch-Gemisches in Förderrichtung (X, X₁, X₂, X₃) zu einem Ableitungskanal (48, 68) zum Abführen des ButterkomButtermilch-Gemisches aus dem Butterungszylinder (41, 61, 81) erfolgt.

3. Verfahren nach Anspruch 2, **dadurch gekennzeichnet, dass** der Transport des Rahms und Butterkorn/Buttermilch-Gemisches in Förderrichtung (X, X₁, X₂, X₃) durch den Aufbau des Butterungszylinders (41, 61, 81) vorgegeben wird.

4. Verfahren nach einem der vorhergehenden Ansprüche, **dadurch gekennzeichnet, dass** das Einleiten des Rahms in den Butterungszylinder (41,61, 81) bei mindestens 30 % der Schlägergesamtlänge, ausgehend von der Förderrichtung (X, X₁, X₂, X₃) erfolgt.

5. Verfahren nach einem der vorhergehenden Ansprüche, **dadurch gekennzeichnet, dass** die Rotationsachse (A) um einen Winkel (α) zur Horizontalen angestellt wird, für die Vorgabe einer Förderrichtung (X₁) des Rahms und Butterkorn/Buttermilch-Gemisches.

6. Verfahren nach Anspruch 5, **dadurch gekennzeichnet, dass** der Winkel (α) maximal 10° beträgt.

7. Verfahren nach einem der vorhergehenden Ansprüche 5 oder 6, **dadurch gekennzeichnet, dass** der Winkel (α) in Abhängigkeit zur Menge ausgelegt ist.

8. Verfahren nach einem der vorhergehenden Ansprüche 1- 7, **dadurch gekennzeichnet, dass** der Schläger (62) zumindest ein Schlagblatt (63a) aufweist, welches zumindest teilweise aus der horizontalen Ausrichtungsebene heraussteht.

9. Verfahren nach Anspruch 8, **dadurch gekennzeichnet, dass** die Schlagblätter von einem Punkt (P), welcher auf der Rotationsachse (A) angeordnet ist, entgegen der Förderrichtung (X₂) bis zum Ende des Schlagblattes (63a) um einen Winkel β von 3 - 10° aus der horizontalen Ausrichtungsebene hervorsteht.

10. Verfahren nach Anspruch 9 oder Anspruch 9, **dadurch gekennzeichnet, dass** der Punkt (P), von dem das Schlagblatt (63a) aus der horizontalen Ausrichtungsebene hervorsteht, zwischen einem ersten und einem zweiten Einlauf angeordnet ist.

11. Verfahren nach einem der Ansprüche 1 - 10, **dadurch gekennzeichnet, dass** der Schläger (82) zumindest ein Schlagblatt (83) aufweist, in welchem Durchbrüche (84b) angebracht sind, wobei der Übergang des Durchbruchs (84b) zwischen zwei gegenüberliegenden Seiten des Schlagblatts (83) eine Schräge (100) aufweist.

12. Verfahren nach Anspruch 11, **dadurch gekennzeichet, dass** die Schräge (100) zwischen 30 - 60°, vorzugsweise 45° beträgt.

13. Butterungszylinder (1,21,41,61,81) einer Butterungsmaschine zur Umwandlung von Rahm in Butterkorn und Buttermilch, mit zumindest einem Gehäuse (11, 31, 71), einem Schläger (2, 22, 42, 62, 82), der drehbar um eine Rotationsachse (A) im Gehäuse (11, 31, 71) angeordnet ist, und einem Ableitungskanal (8, 28, 48, 68), **dadurch gekennzeichnet, dass** der Rahmzufluss durch mehrere ortsfeste Einläufe (5a, 5b, 5c, 45a, 45b, 45c, 65a, 65b, 65c, 85a-c), die am Gehäuse (11, 71) entlang der Rotationsachse A angeordnet sind oder einen variablen Einlauf (25, 26), welcher mehrere Positionen (B) am Gehäuse (31) entlang der Rotationsachse (A) einnehmen kann, erfolgt.

## Claims

1. Method for adjusting the power range of a buttermaking machine to a cream inflow amount, the buttermaking machine comprising a buttermaking cylinder (1, 21, 41, 61, 81) with a housing (11, 31, 71) and a dasher (2, 22, 42, 62, 82), which is arranged rotatably about an axis of rotation (A), comprising the following steps:
a. introducing the cream inflow amount into the buttermaking cylinder (1, 21, 41, 61, 81);
b. converting cream into butter grain and buttermilk; and
c. discharging the buttermilk/butter-grain mixture from the buttermaking cylinder (1, 21, 41, 61, 81)
d. the introduction of the cream inflow amount into the buttermaking cylinder (1, 21, 41, 61, 81) may take place and/or takes place at at least two different points (5a, 5b, 5c, B, 45a, 45b, 45c, 65a, 65b, 65c, 85a-c) along the axis of rotation (A) of the dasher (2, 22, 42, 62, 82),
**characterized in that**
e. the introduction of the cream takes place through at least two inlets (5a, 5b, 5c, 45a, 45b, 45c, 65a, 65b, 65c, 85a-c), which are arranged fixedly on the housing (11, 71) of the buttermaking cylinder (1, 41, 61, 81), or
f. the introduction of the cream takes place through preferably one inlet (25, 26), which is arranged movably on the housing (31) of the buttermaking cylinder (21) and directs cream to a space inside the buttermaking cylinder (21) at any desired position along the axis of rotation (A).

2. Method according to Claim 1, **characterized in that**, during the conversion of cream into butter grain and buttermilk, transport of the cream and butter-grain/buttermilk mixture takes place in the feeding direction (X, X₁, X₂, X₃) to an outlet channel (48, 68) for discharging the butter-grain/buttermilk mixture from the buttermaking cylinder (41, 61, 81).

3. Method according to Claim 2, **characterized in that** the transport of the cream and butter-grain/buttermilk mixture in the feeding direction (X, X₁, X₂, X₃) is predetermined by the structure of the buttermaking cylinder (41, 61, 81).

4. Method according to one of the preceding claims, **characterized in that** the introduction of the cream into the buttermaking cylinder (41, 61, 81) takes place over at least 30% of the total length of the dasher, on the basis of the feeding direction (X, X₁, X₂, X₃).

5. Method according to one of the preceding claims, **characterized in that** the axis of rotation (A) is adjusted by an angle (α) in relation to the horizontal, for predetermining a feeding direction (X₁) of the cream and the butter-grain/buttermilk mixture.

6. Method according to Claim 5, **characterized in that** the angle (α) is a maximum of 10°.

7. Method according to either of the preceding Claims 5 and 6, **characterized in that** the angle (α) is designed in dependence on the amount.

8. Method according to one of the preceding Claims 1-7, **characterized in that** the dasher (62) has at least one dasher blade (63a), which protrudes at least partially from the horizontal alignment plane.

9. Method according to Claim 8, **characterized in that**, from a point (P), which is arranged on the axis of rotation (A), counter to the feeding direction (X₂) up to the end of the dasher blade (63a), the dasher blades protrude from the horizontal alignment plane by an angle β of 3-10°.

10. Method according to Claim 9 or Claim 9, **characterized in that** the point (P) from which the dasher blade (63a) protrudes out of the horizontal alignment is arranged between a first inlet and a second inlet.

11. Method according to one of Claims 1-10, **characterized in that** the dasher (82) has at least one dasher blade (83), in which apertures (84b) are provided, the transition of the aperture (84b) between two opposite sides of the dasher blade (83) having a bevel (100).

12. Method according to Claim 11, **characterized in that** the bevel (100) is between 30 and 60°, preferably 45°.

13. Buttermaking cylinder (1, 21, 41, 61, 81) of a buttermaking machine for converting cream into butter grain and buttermilk, with at least one housing (11, 31, 71), a dasher (2, 22, 42, 62, 82), which is arranged rotatably about an axis of rotation (A) in the housing (11, 31, 71), and an outlet channel (8, 28, 48, 68), **characterized in that** the cream inflow takes place through a number of fixed inlets (5a, 5b, 5c, 45a, 45b, 45c, 65a, 65b, 65c, 85a-c), which are arranged on the housing (11, 71) along the axis of rotation A, or one variable inlet (25, 26), which can assume a number of positions (B) on the housing (31) along the axis of rotation (A).

## Revendications

1. Procédé d'adaptation de la plage de puissance d'une machine à baratter à l'alimentation en crème, cette machine à baratter comportant un cylindre de barattage (1, 21, 41, 61, 81) équipé d'un boîtier (11, 31, 71) et d'un malaxeur (2, 22, 42, 62, 82) qui est monté mobile en rotation autour d'un axe de rotation (A), procédé comprenant les étapes consistant à :
a. introduire la quantité de crème dans le cylindre de barattage (1, 21, 41, 61, 81),
b. transformer la crème en grains de beurre et en babeurre, et
c. extraire le mélange babeurre-grains de beurre du cylindre de barattage (1, 21, 41, 61, 81),
d. l'introduction la quantité de crème dans le cylindre de barattage (1, 21, 41, 61, 81) pouvant être effectuée et/ou étant effectuée au niveau d'au moins deux emplacements différents (5a, 5b, 5c, B, 45a, 45b, 45c, 65a, 65b, 65c, 85a-c) le long de l'axe de rotation (A) du malaxeur (2, 22, 42, 62, 82),
**caractérisé en ce que**
e. l'introduction de la crème est effectuée par au moins deux entrées (5a, 5b, 5c, 45a, 45b, 45c, 65a, 65b, 65c, 85a-c) qui sont fixes sur le boîtier (11, 71) du cylindre de barattage (1, 41, 61, 81), ou
f. l'introduction de la crème est effectuée par de préférence une entrée (25, 26) qui est mobile sur le boîtier (31) du cylindre de barattage (21) et transfère la crème dans le volume interne du cylindre de barattage (21) au niveau d'une position quelconque le long de l'axe de rotation (A).

2. Procédé conforme à la revendication 1,
**caractérisé en ce que**
pendant la transformation de la crème en grains de beurre et en babeurre un transport de la crème et du mélange grains de beurrebabeurre est effectué dans la direction de transport (X, X₁, X₂, X₃) vers un canal d'évacuation (48, 68) pour évacuer le mélange grains de beurre-babeurre du cylindre de barattage (41, 61, 81).

3. Procédé conforme à la revendication 2,
**caractérisé en ce que**
le transport de la crème et du mélange grains de beurre-babeurre dans la direction de transport (X, X₁, X₂, X₃) est défini par la configuration du cylindre de barattage (41, 61, 81).

4. Procédé conforme à l'une des revendications précédentes,
**caractérisé en ce que**
l'introduction de la crème dans le cylindre de barattage (41, 61, 81) s'effectue sur au moins 30% de la longueur totale du malaxeur à partir de la direction de transport (X, X₁, X₂, X₃).

5. Procédé conforme à l'une des revendications précédentes,
**caractérisé en ce que**
l'axe de rotation (A) est réglé de façon à définir un angle (α) par rapport à l'horizontale pour permettre l'obtention d'une direction de transport (X₁) de la crème et du mélange grains de beurre-babeurre.

6. Procédé conforme à la revendication 5,
**caractérisé en ce que**
l'angle (α) est au maximum égal à 10°.

7. Procédé conforme à l'une des revendications précédentes 5 et 6,
**caractérisé en ce que**
l'angle (α) est réglé en fonction de la quantité de crème.

8. Procédé conforme à l'une des revendications précédentes 1 à 7,
**caractérisé en ce que**
le malaxeur (62) comprend au moins une pale de malaxage (63a) qui dépasse au moins partiellement du plan d'orientation horizontal.

9. Procédé conforme à la revendication 8,
**caractérisé en ce que**
les pales de malaxage dépassent à partir d'un point (P) qui est situé sur l'axe de rotation (A), dans le sens opposé à la direction de transport (X₂) jusqu'à l'extrémité de la pale de malaxage (63a) d'un angle β de 3 à 10° du plan d'orientation horizontal.

10. Procédé conforme à la revendication 9 ou à la revendication 9,
**caractérisé en ce que**
le point (P) à partir duquel la pale de malaxage (63a) dépasse du plan d'orientation horizontal est situé entre une première et une seconde entrée.

11. Procédé conforme à l'une des revendications 1 à 10,
**caractérisé en ce que**
le malaxeur (82) comprend au moins une pale de malaxage (83) comprenant des perçages (84b), la transition du passage (84b) entre deux faces opposées de la pale de malaxage (83) comprenant un biseau (100).

12. Procédé conforme à la revendication 11,
**caractérisé en ce que**
le biseau (100) est compris entre 30° et 60° et de préférence égal à 45°.

13. Cylindre de barattage (1, 21, 41, 61, 81) d'une machine de barattage permettant la transformation de crème en grains de beurre et en babeurre comprenant au moins un boîtier (11, 31, 71), un malaxeur (2, 22, 42, 62, 82) monté mobile en rotation dans le boîtier (11, 31, 71) autour d'un axe de rotation (A) et un canal d'évacuation (8, 28, 48, 68),
**caractérisé en ce que**
l'alimentation en crème est effectuée par l'intermédiaire de plusieurs entrées fixes (5a, 5b, 5c, 45a, 45b, 45c, 65a, 65b, 65c, 85a-c) qui sont situées sur le boîtier (11, 71) le long de l'axe de rotation (A) ou par une entrée variable (25, 26) qui peut prendre plusieurs positions (B) sur le boîtier (31) le long de l'axe de rotation (A).
